# EUROPÄISCHE PATENTSCHRIFT

(11) **EP 2 132 721 B1**
(45) Veröffentlichungstag und Bekanntmachung des Hinweises auf die Patenterteilung: **30.09.2020**
(21) Anmeldenummer: 08716274.9
(22) Anmeldetag: 05.03.2008
(51) Int. Cl.: G08C 17/00, G07C 9/00

(54) **VORRICHTUNG ZUM ANSTEUERN EINES AKTUATORS**
DEVICE FOR CONTROLLING AN ACTUATOR
DISPOSITIF POUR COMMANDER UN ACTIONNEUR

(30) Priorität: 06.03.2007 DE 102007010896
(43) Veröffentlichungstag der Anmeldung: 16.12.2009
(73) Patentinhaber: Giesecke+Devrient Mobile Security GmbH, 81677 München (DE)
(72) Erfinder: FINKENZELLER, Klaus, 85774 Unterföhring (DE); KNIES, Emil, 82166 Gräfelfing (DE)
(86) Internationale Anmeldenummer: PCT/EP2008/001757
(87) Internationale Veröffentlichungsnummer: WO 2008/107178

(56) Entgegenhaltungen:
- EP-A- 0 505 084
- WO-A-2006/016149
- US-A- 4 031 434
- US-A- 5 479 799

## Beschreibung

Die Erfindung betrifft eine Vorrichtung zum Ansteuern eines Aktuators. Weiterhin betrifft die Erfindung einen Interfacebaustein für eine derartige Vorrichtung, ein System, das zusätzlich zu einer derartigen Vorrichtung einen Aktuator und einen Sender aufweist sowie ein Verfahren zum Ansteuern eines Aktuators.

Es ist bereits bekannt, zur Aktivierung eines Aktuators mit Hilfe eines integrierten Schaltkreises eine Verbindung zwischen einer Energiequelle und dem Aktuator durchzuschalten. Eine derartige Aktuatorsteuerung kann beispielsweise bei einem elektronischen Schließzylinder eingesetzt werden. Bei diesem Anwendungsfall ist der Aktuator als ein Schließmagnet ausgebildet. Als Energiequelle für den Betrieb des integrierten Schaltkreises und des Schließmagneten dient eine in den elektronischen Schließzylinder eingebaute Batterie. Nach diesem Prinzip lassen sich sehr hochwertige elektronische Schließzylinder realisieren. Allerdings besteht das Risiko, dass ein elektronischer Schließzylinder seine Dienste versagt, weil die Batterie keinen ausreichenden Ladezustand mehr aufweist. Dies kann auch bei Anwendungsfällen auftreten, bei denen der Schließmagnet vergleichsweise selten aktiviert wird, da der integrierte Schaltkreis fortwährend Energie verbraucht und dadurch die Batterie allmählich entlädt.

Weiterhin ist es aus Klaus Finkenzeller, RFID-Handbuch, 3. Auflage (2002) Seiten 81 - 85 bekannt, die Versorgungsspannung eines Transponders auf einen konstanten Wert zu regeln. Bei dem Transponder handelt es sich um eine elektronische Schaltungsanordnung, die mit einem Kommunikationspartner auf kontaktlosem Weg Daten austauscht. Der Transponder kann so ausgebildet sein, dass er die für seinen Betrieb erforderliche Versorgungsspannung mittels einer Spule, die auch für die Datenübertragung verwendet wird, aus dem für die Datenübertragung erzeugten Feld bezieht. Zur Regelung der Versorgungsspannung kann der Transponder einen Shunt-Regler aufweisen, mit dem durch Schaltung eines regelbaren Widerstands parallel zur Spule des Transponders die Güte des Schwingkreises und damit die Versorgungsspannung des Transponders eingestellt werden kann.

Schließlich ist es bekannt, elektrische Geräte, beispielsweise eine elektrische Zahnbürste, durch eine kontaktlose Kopplung mit einer Aufladeeinrichtung aufzuladen. Für den Betrieb wird ein derartiges Gerät von der Aufladeeinrichtung entfernt und mittels eines am Gerät angeordneten Schalters manuell eingeschaltet.

Die US 4,031,434 offenbart einen elektronisches Schließsystem, welches über induktive Kopplung mit Energie versorgt wird und daher keine eigene Stromversorgung, beispielsweise in Form einer Batterie, benötigt.

Auch aus der US 5,479,799 ist ein derartiges Schließsystem bekannt.

Jedoch ist aus dem Stand der Technik kein Schließsystem bekannt, welches eine Modulationseinrichtung aufweist.

Der Erfindung liegt daher die Aufgabe zugrunde, eine Vorrichtung zur Ansteuerung eines Aktuator bereitzustellen, der eine Modulationseinrichtung bereitstellt.

Diese Aufgabe wird durch die Merkmalskombination des Anspruchs 1 gelöst.

Die erfindungsgemäße Vorrichtung zum Ansteuern eines Aktuators weist einen Energiespeicher zur Speisung des Aktuators, einen integrierten Schaltkreis zur Steuerung der Energiezufuhr vom Energiespeicher zum Aktuator und eine Antenneneinrichtung auf. Die Besonderheit der erfindungsgemäßen Vorrichtung besteht darin, dass an die Antenneneinrichtung ein gegenüber dem integrierten Schaltkreis als eine separate Einheit ausgebildeter Interfacebaustein zur kontaktlosen Übertragung von Energie für den Energiespeicher und von Daten für eine Kommunikation mit dem integrierten Schaltkreis angeschlossen ist.

Die Erfindung hat den Vorteil, dass der integrierte Schaltkreis über keine analogen Hochfrequenzkomponenten verfügen muss und somit kostengünstig verfügbare Standardschaltkreise verwendet werden können. Außerdem ist lediglich ein Energiespeicher mit einer relativ geringen Kapazität erforderlich, die für eine einmalige Aktivierung des Aktuators ausreicht. Ein weiterer Vorteil besteht in der hohen Betriebssicherheit der erfindungsgemäßen Vorrichtung, die daraus resultiert, dass der Energiespeicher über den Interfacebaustein aufgeladen werden kann, so dass auf einfache Weise stets eine ausreichende Energiemenge für die Aktivierung des Aktuators bereitgestellt werden kann und das Risiko einer Funktionsunfähigkeit wegen eines nicht ausreichend geladenen Energiespeichers sehr gering ist. Zudem entfällt der bei bekannten Vorrichtungen erforderliche Batteriewechsel. Schließlich ist es noch von Vorteil, dass auch Aktuatoren mit großer Leistungsaufnahme kurzeitig betrieben werden können.

Vorzugsweise ist eine Schalteinrichtung zur Verbindung des Energiespeichers mit dem Aktuator vorgesehen. In einer vorteilhaften Ausgestaltung der Erfindung ist mit der Schalteinrichtung eine Verbindung zwischen dem Energiespeicher und dem Aktuator herstellbar, ohne die Energiezufuhr von der Antenneneinrichtung zum Energiespeicher zu unterbrechen. Dadurch wird erreicht, dass der Aktuator über einen längeren Zeitraum aus dem Energiespeicher gespeist wird und somit die Wirkung der erfindungsgemäßen Vorrichtung verbessert wird. Weiterhin ist es von Vorteil, wenn der Energiespeicher ausschließlich der Speisung des Aktuators und nicht der Versorgung des integrierten Schaltkreises dient. Dadurch kann eine hohe Verfügbarkeit des Energiespeichers für die Aktivierung des Aktuators gewährleistet werden.

Der Interfacebaustein ist bevorzugt für eine gleichzeitige Energie- und Datenübertragung ausgelegt. Dadurch wird beispielsweise eine Kommunikation des integrierten Schaltkreises über den Interfacebaustein während des Aufladens des Energiespeichers ermöglicht, so dass die insgesamt für die Aktivierung des Aktuators benötigte Zeit gering gehalten werden kann. Der Interfacebaustein kann eine Regelschaltung zur Regelung einer von der Antenneneinrichtung erzeugten Spannung auf einen konstanten Wert aufweisen. Die geregelte Spannung kann dem integrierten Schaltkreis als Betriebsspannung zugeführt werden, so dass auch der integrierte Schaltkreis aus der übertragenen Energie versorgt werden kann und keine eigene Energiequelle benötigt. Weiterhin ist es von Vorteil, wenn von der Regelschaltung ein Ladestrom zum Laden des Energiespeichers ausgebbar ist. Dies ermöglicht eine effiziente Nutzung der übertragenen Energie und ein schnelles Laden des Energiespeichers.

Der Interfacebaustein weist eine Modulationseinrichtung, nämlich einen Lastmodulator, auf. Dadurch wird dem integrierten Schaltkreis ein kontaktloses Senden von Daten ermöglicht. Die Modulationseinrichtung ist vorzugsweise direkt vom integrierten Schaltkreis ansteuerbar. Weiterhin kann der Interfacebaustein eine mit der Antenneneinrichtung gekoppelte Signalformeinrichtung zur Umwandlung eines von der Antenneneinrichtung empfangenen Signals in ein Digitalsignal insbesondere gleicher Frequenz aufweisen. Ein derartiges Signal kann vom integrierten Schaltkreis problemlos verarbeitet werden.

Zum Schutz vor einer unberechtigten Aktivierung des Aktuators kann der integrierte Schaltkreis so ausgebildet sein, dass damit kryptographische Operationen durchführbar sind. Insbesondere ist der integrierte Schaltkreis als ein Chip für Chipkarten ausgebildet. Derartige Chips weisen einen hohen Sicherheitsstandard auf und sind kostengünstig verfügbar.

Der Energiespeicher ist vorzugsweise als ein Kondensator ausgebildet. Ein Kondensator kann kurzzeitig einen großen Strom liefern und eignet sich daher besonders gut zum Aktivieren des Aktuators. Der Aktuator kann beispielsweise Bestandteil einer Schließeinrichtung sein.

Der erfindungsgemäße Interfacebaustein zeichnet sich dadurch aus, dass er gegenüber dem integrierten Schaltkreis als eine separate Einheit ausgebildet ist und dass damit kontaktlos Energie für den Energiespeicher und Daten für eine Kommunikation mit dem integrierten Schaltkreis übertragbar sind.

Das erfindungsgemäße System zum Ansteuern eines Aktuators weist neben der erfindungsgemäßen Steuervorrichtung ein externes Gerät auf. Der Aktuator ist von der Steuervorrichtung abhängig von einem kontaktlos übertragenen Signal des externen Geräts ansteuerbar.

Beim erfindungsgemäßen Verfahren zum Ansteuern eines Aktuators mit einer Steuervorrichtung wird ein Signal kontaktlos zur Steuervorrichtung übertragen und der Aktuator abhängig von dem Signal mit einem Energiespeicher der Steuervorrichtung verbunden. Das erfindungsgemäße Verfahren zeichnet sich dadurch aus, dass das Signal kontaktlos zu einem Interfacebaustein der Steuervorrichtung übertragen wird, über den der Steuervorrichtung auf kontaktlosem Weg Energie zum Aufladen des Energiespeichers zugeführt wird.

Die Erfindung wird nachstehend anhand der in der Zeichnung dargestellten Ausführungsbeispiele erläutert.

Es zeigen:
- Fig. 1: eine schematische Darstellung eines Ausführungsbeispiels des erfindungsgemäßen Systems,
- Fig. 2: ein vereinfachtes Blockschaltbild eines Ausführungsbeispiels des Interfacebausteins,
- Fig. 3: ein Schaltbild eines Ausführungsbeispiels des Shunt-Reglers und
- Fig. 4: ein Schaltbild eines weiteren Ausführungsbeispiels des Shunt-Reglers.

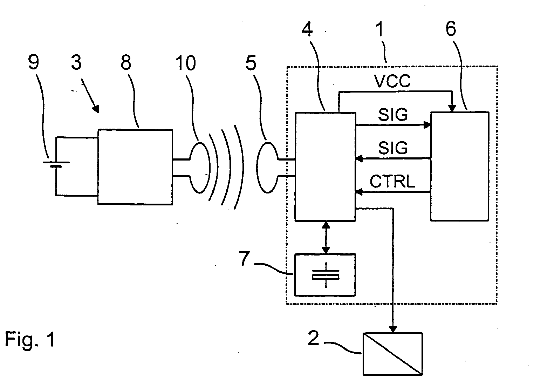

Fig. 1 zeigt eine schematische Darstellung eines Ausführungsbeispiels des erfindungsgemäßen Systems. Das System weist eine Steuervorrichtung 1 zur Ansteuerung eines Aktuators 2 und ein externes Gerät 3 auf. Bestandteile der Steuervorrichtung 1 sind ein Interfacebaustein 4, an den eine Antennenspule 5 angeschlossen ist, ein Smartcard-Chip 6 und ein mit dem Interfacebaustein 4 verbundener Kondensator 7 zur Energiespeicherung. Das externe Gerät 3 verfügt über eine Elektronik 8, die von einer Batterie 9 mit Spannung versorgt wird und an die eine Geräteantenne 10 angeschlossen ist.

Bei dem Aktuator 2 kann es sich beispielsweise um einen Schließmagneten für batterielose Schlösser von Banknotenkassetten oder auch für Türschlösser handeln. Ebenso kann es sich bei dem Aktuator 2 auch um eine sonstige optische, akustische, elektrothermische, elektrochemische, thermomechanische, elektromechanische, elektromagnetische usw. Einrichtung handeln, die aufgrund ihres hohen Energieverbrauchs oder aufgrund ihres hohen Einschaltstroms nicht unmittelbar von der Antennenspule 5 gespeist werden kann.

Der Interfacebaustein 4 ist für eine kontaktlose Datenübertragung im Hochfrequenzbereich, beispielsweise im Bereich 13,56 MHz, ausgebildet und in Fig. 2 näher dargestellt. Die Antennenspule 5 ist beispielsweise aus Draht gewickelt und auf den vorgesehenen Frequenzbereich abgestimmt.

Bei dem Smartcard-Chip 6 handelt es sich um einen integrierten Schaltkreis, der vorwiegend bei Chipkarten eingesetzt wird. Ein geeigneter Smartcard-Chip 6 ist beispielsweise unter der Bezeichnung P5CN072 von der Firma Philips erhältlich. Der Smartcard-Chip 6 ist in der Lage, über den Interfacebaustein 4 zu kommunizieren und kann hierzu beispielsweise die auf einer ISO/IEC 14443 Schnittstelle benötigten Signale erzeugen und dekodieren. Dabei wird ein Hilfsträger von 848 kHz verwendet und es erfolgt eine Kodierung im Basisband gemäß einem Manchester Code oder einem Miller Code. Hierfür ist je ein Signalpfad vom Interfacebaustein 4 zum Smartcard-Chip 6 und in umgekehrter Richtung zur Übertragung von Signalen SIG vorgesehen. Weiterhin besteht zwischen dem Interfacebaustein 4 und dem Smartcard-Chip 6 eine Verbindung, über die der Smartcard-Chip 6 vom Interfacebaustein 4 mit einer Betriebsspannung VCC versorgt wird sowie eine Verbindung zur Übermittlung eines Steuersignals CTRL vom Smartcard-Chip 6 zum Interfacebaustein 4.

Dem erfindungsgemäßen System liegt folgendes Funktionsprinzip zugrunde:
Die Geräteantenne 10 des externen Geräts 3 wird der Antennenspule 5 der Steuervorrichtung 1 angenähert. Dabei wird von der Geräteantenne 10 des externen Geräts 3 über ein magnetisches Wechselfeld Energie auf die Antennenspule 5 der Steuervorrichtung 1 übertragen und nach einer Aufbereitung durch den Interfacebaustein 4 damit der Smartcard-Chip 6 betrieben sowie der Kondensator 7 aufgeladen. Auf gleichem Weg findet eine Datenübertragung vom externen Gerät 3 zum Smartcard-Chip 6 und gegebenenfalls auch in umgekehrter Richtung statt. Über diese Datenübertragung kann beispielsweise eine Authentisierung des externen Geräts 3 gegenüber dem Smartcard-Chip 6 erfolgen und vom externen Gerät 3 ein Befehl zur Aktivierung des Aktuators 2 an den Smartcard-Chip 6 übermittelt werden. Nach einer erfolgreichen Authentisierung führt der Smartcard-Chip 6 den Befehl aus und veranlasst den Interfacebaustein 4, den Kondensator 7 zum Aktuator 2 durchzuschalten. Dies führt dazu, dass der Kondensator 7 über den Aktuator 2 entladen wird und der Aktuator 2 dadurch aktiviert wird. Der Entladevorgang erfolgt sehr viel schneller als der zuvor durchgeführte Ladevorgang, so dass dementsprechend höhere Stromstärken erzielbar sind.

Wenn der Aktuator 2 zum Beispiel als ein Schließmagnet eines batterielosen Türöffners ausgebildet ist, kann auf die beschriebene Weise der Türöffner betätigt werden. Der Aktuator 2 kann auch in ein Schloss einer Geldkassette oder eine sonstige Schließvorrichtung integriert sein. In allen Fällen ist beim erfindungsgemäßen System eine hohe Verfügbarkeit gegeben, da der Kondensator 7 jeweils unmittelbar vor der Aktivierung des Aktuators 2 aufgeladen wird.

Fig. 2 zeigt ein vereinfachtes Blockschaltbild eines Ausführungsbeispiels des Interfacebausteins 4. Die Antennenspule 5 ist an zwei Anschlüsse des Interfacebausteins 4 angeschlossen, die mit LA und LB bezeichnet sind. In der Nähe der Anschlüsse LA und LB ist eine Kapazität 11 eingezeichnet, die die Eingangskapazität des Interfacebausteins 4 für die Anschlüsse LA und LB repräsentiert. Intern ist an die Anschlüsse LA und LB ein Lastmodulator 12 angeschlossen, dem ein Gleichrichter 13 mit seiner Wechselstromseite nachgeschaltet ist. Der Lastmodulator 12 weist einen Belastungswiderstand 14 auf, der über einen Transistor 15 den Anschlüssen LA und LB parallel geschaltet werden kann und dann die Antennenspule 5 dementsprechend belastet.

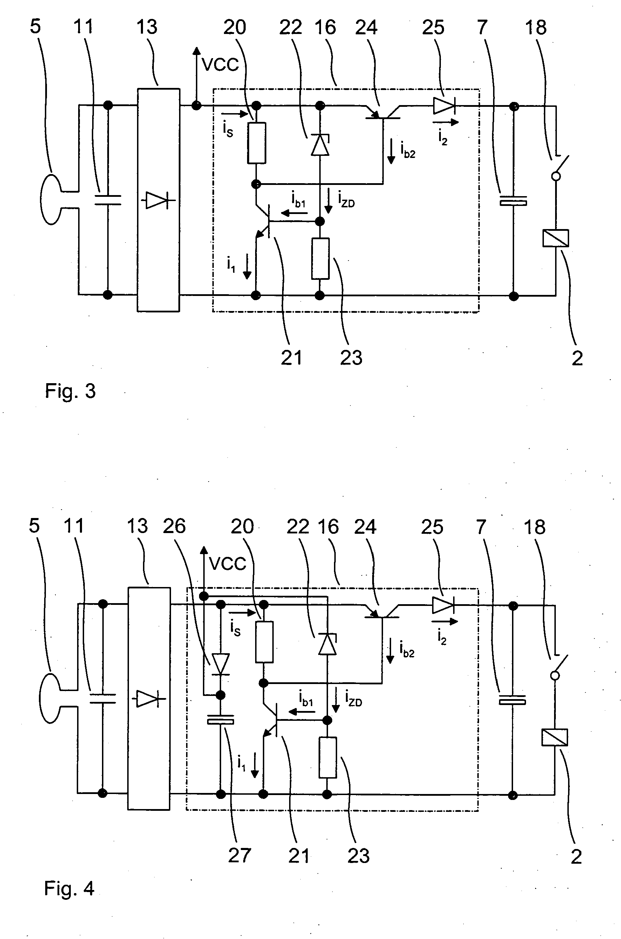

Dem Gleichrichter 13 ist auf seiner Gleichstromseite ein Shunt-Regler 16 nachgeschaltet, der anhand von Fig. 3 näher erläutert wird. Dem Shunt-Regler 16 ist optional ein Spannungsdetektor 17 nachgeschaltet. Ein Anschluss des Spannungsdetektors 17 ist mit einem Schaltbaustein 18 und einem Ein-/ Ausgang des Interfacebausteins 4 verbunden, der als i₂-out bezeichnet ist und an den der Kondensator 7 angeschlossen ist. Der Schaltbaustein 18 ist weiterhin mit einem Ausgang Us-out des Interfacebausteins 4 verbunden, an den der Aktuator 2 angeschlossen ist. Die Steuerleitung des Schaltbausteins 18, der beim dargestellten Ausführungsbeispiel als ein Transistor ausgebildet ist, ist mit einem Eingang CTRL des Interfacebausteins 4 verbunden.

Der Interfacebaustein 4 weist weiterhin einen Signalformer 19 auf, der zwischen dem Lastmodulator 12 und der Wechselstromseite des Gleichrichters 13 an eine Leitung zum Anschluss LA angeschlossen ist und zudem mit einem Ausgang SIGOUT des Interfacebausteins 4 verbunden ist. An einem Eingang SIGIN des Interfacebausteins 4 ist eine Steuerelektrode des Transistors 15 angeschlossen. Weiterhin verfügt der Interfacebaustein 4 über einen Betriebsspannungsausgang VCC-out und einen Masseanschluss GND, die jeweils mit einer Verbindungsleitung zwischen dem Gleichrichter 13 und dem Shunt-Regler 16 verbunden sind. Schließlich ist beim Interfacebaustein 4 noch ein Ausgang Sense-out vorgesehen, der mit einem entsprechenden Anschluss des Spannungsdetektors 17 verbunden ist.

Befindet sich die Antennenspule 5 in einem magnetischen Hochfrequenzfeld, das vom externen Gerät 3 erzeugt wird, so wird in der Antennenspule 5 eine Hochfrequenzspannung induziert und in die Anschlüsse LA und LB des Interfacebausteins 4 eingespeist. Das Hochfrequenzfeld weist beispielsweise eine Frequenz im Bereich 13,56 MHz auf. Der Gleichrichter 13 richtet die Hochfrequenzspannung gleich und führt die so erzeugte Gleichspannung dem Shunt-Regler 16 zu. Der Shunt-Regler 16 regelt die Gleichspannung auf einen konstanten Wert, so dass am Ausgang VCC-out eine konstante Gleichspannung als Betriebsspannung VCC für den Smartcard-Chip 6 abgegriffen werden kann. Dies ist beispielsweise deshalb erforderlich, weil die in der Antennenspule 5 induzierte Spannung von der Feldstärke des Magnetfelds am Ort der Antennenspule 5 abhängt. Weiterhin liefert der Shunt-Regler 16 einen Strom i₂ zum Laden des Kondensators 7. Der Strom i₂ wird dem Kondensator 7 über den Ein-/ Ausgang i₂-out des Interfacebausteins 4 zugeführt und vom Shunt-Regler 16 so begrenzt, dass es nicht zu Einbrüchen der Betriebsspannung VCC kommt.

Der Ladezustand des Kondensators 7 wird vom Spannungsdetektor 17 überwacht, der die jeweils am Kondensator 7 anliegende Spannung ermittelt. Der Spannungsdetektor 17 vergleicht die am Kondensator 7 anliegende Spannung mit wenigstens einem Vergleichswert und gibt abhängig vom Ergebnis des Vergleichs am Ausgang Sense-out des Interfacebausteins 4 wenigstens einen Zustandswert aus. Der Zustandswert kann beispielsweise angeben, ob der Kondensator 7 geladen ist oder nicht. Weist der Spannungsdetektor 17 einen A/D-Wandler auf, so kann der Ladezustand auch in mehreren diskreten Schritten überwacht werden, die sich jeweils auf ein Spannungsintervall für die am Kondensator 7 anliegende Spannung beziehen.

Wenn ein ausreichender Ladezustand des Kondensators 7 vorhanden ist, kann der Aktuator 2 aktiviert werden, indem der Schaltbaustein 18 durchgesteuert und dadurch der Kondensator 7 über den Aktuator 2 entladen wird. Dabei wird durch die dargestellte Schaltungsanordnung erreicht, dass dem Aktuator 2 bei durchgesteuertem Schaltbaustein 18 zusätzlich zum Endladestrom des Kondensators 7 der vom Shunt-Regler 16 ausgegebene Strom i₂ zugeführt wird. Prinzipiell ist es auch möglich, den Schaltbaustein 18 so zu schalten, dass er den Kondensator 7 entweder mit dem Shunt-Regler 16 oder mit dem Aktuator 2 verbindet. In diesem Fall wird der Aktuator 2 allerdings ausschließlich durch den Entladestrom des Kondensators 7 aktiviert. Der Schaltbaustein 18 kann auch außerhalb des Interfacebausteins 4 angeordnet sein.

Die Durchsteuerung des Schaltbausteins 18 wird durch Anlegen eines entsprechenden Steuersignals an den Steuereingang CTRL des Interfacebausteins 4 veranlasst. Das Steuersignal wird vom Smartcard-Chip 6 erzeugt, der hierzu von dem in Fig. 1 dargestellten externen Gerät 3 angewiesen wird. Die Kommunikation zwischen dem externen Gerät 3 und dem Smartcard-Chip 6 erfolgt kontaktlos und wird über den Interfacebaustein 4 abgewickelt.

Zur Datenübertragung vom externen Gerät 3 zum Smartcard-Chip 6 wird von der Geräteantenne 10 des externen Geräts 3 ein entsprechend moduliertes hochfrequentes magnetisches Wechselfeld erzeugt, das in der Antennenspule 5 des Interfacebausteins 4 eine hochfrequente Wechselspannung induziert. Diese Wechselspannung wird durch den Signalformer 19 in ein gleichfrequentes Digitalsignal, beispielsweise ein TTL-Signal, umgewandelt und über den Ausgang SIGOUT dem Smartcard-Chip 6 zugeführt. Der Signalformer 19 kann beispielsweise als ein Schmitt-Trigger oder eine Komparator-Schaltung ausgeführt sein und je nach Einstellung seiner internen Schaltschwelle unterschiedliche Modulationsgrade als Digitalsignal wiedergeben. Dabei wird vom Signalformer 19 jeweils nur dann ein Digitalsignal ausgegeben, wenn die in den Signalformer 19 eingespeiste Wechselspannung über der Schaltschwelle liegt. Unter der Schaltschwelle wird vom Signalformer 19 kein Digitalsignal ausgegeben. So kann bei entsprechender Einstellung der Schaltschwelle beispielsweise ein 10% ASK-moduliertes Datensignal mit NRZ-Kodierung (ISO/IEC 14443 Typ B) für die logische Bitfolge "1010" als ein 13,56 MHz- Taktsignal in der Folge "ein-aus-ein-aus" ausgegeben werden. ASK steht dabei für Amplitudentastung und NRZ-Kodierung bedeutet, dass eine binäre "1" durch einen High-Pegel und eine binäre "0" durch einen Low-Pegel dargestellt wird. Ein derartiges Digitalsignal kann vom Smartcard-Chip 6 verarbeitet werden.

Der Smartcard-Chip 6 wertet das Digitalsignal aus und veranlasst beispielsweise eine Aktivierung des Aktuators 2. Um ein missbräuchliches Aktivieren des Aktuators 2 zu verhindern, kann der vom externen Gerät 3 übermittelte Aktivierungsbefehl kryptographisch abgesichert sein und/oder für die Aktivierung eine Authentisierung des externen Geräts 3 vorausgesetzt werden. Der Smartcard-Chip 6 ist so ausgebildet, dass er die benötigten kryptographischen Operationen ausführen kann. Je nach Art der kryptographischen Absicherung kann auch eine Datenübertragung vom Smartcard-Chip 6 zum externen Gerät 3 erforderlich sein.

Die Datenübertragung vom Smartcard-Chip 6 zum externen Gerät 3 erfolgt ebenfalls kontaktlos über den Interfacebaustein 4. Dabei speist der Smart-card-Chip 6 das zu übertragende Digitalsignal in den Eingang SIGNIN des Interfacebausteins 4 ein. Es handelt sich dabei beispielsweise um ein 848 kHz TTL-Signal. Dieses Signal kann ASK-moduliert sein und eine Manchester-Kodierung (ISO/IEC 14443 Typ A) aufweisen. Ebenso ist auch ein BPSKmoduliertes Signal mit NRZ-Kodierung (ISO/IEC 14443 Typ B) möglich. BPSK steht dabei für Binary Phase Shift Keying und bezeichnet ein Modulationsverfahren, bei dem zwischen zwei Phasenzuständen umgeschaltet wird. Das in den Interfacebaustein 4 eingespeiste Digitalsignal wird direkt dem Lastmodulator 12 zugeführt und dort an die Steuerelektrode des Transistors 15 angelegt. Dies bedeutet, dass die Belastung der Antennenspule 5 im Takt des Datensignals variiert. Diese Variation wirkt über das vom externen Gerät 3 erzeugte magnetische Wechselfeld auf das externe Gerät 3 zurück und kann dort im Hinblick auf den Datengehalt ausgewertet werden.

Um den Betriebszustand der Steuerschaltung 1 anzuzeigen, kann an den Ausgang VCC-out des Interfacebausteins 4 eine Leuchtdiode angeschlossen werden, die anzeigt, dass eine ausreichende Betriebsspannung VCC vorhanden ist. Alternativ dazu oder zusätzlich kann parallel zum Kondensator 7 eine Leuchtdiode geschaltet werden, um den Ladezustand des Kondensators 7 optisch anzuzeigen. Ebenso ist es auch möglich eine Leuchtdiode mit dem Signal am Ausgang Sense-out des Interfacebausteins 4 anzusteuern.

Fig. 3 zeigt ein Schaltbild eines Ausführungsbeispiels des Shunt-Reglers 16. Zusätzlich sind in Fig. 3 einige Komponenten der äußeren Beschaltung des Shunt-Reglers 16 dargestellt. Der Shunt-Regler 16 ist schaltungstechnisch zwischen der Gleichspannungsseite des Gleichrichters 13 und dem Kondensator 7 angeordnet, wobei eine Masseleitung vom Gleichrichter 13 zum Kondensator 7 durchgeschleift ist. Zwischen dem Gleichrichter 13 und dem Shunt-Regler 16 kann die Betriebsspannung VCC für den Smartcard-Chip 6 abgegriffen werden. An die Wechselspannungsseite des Gleichrichters 13 ist die Antennenspule 5 angeschlossen, der die bereits in Fig. 2 dargestellte Eingangskapazität 11 des Interfacebausteins 4 parallel geschaltet ist. Der Aktuator 2 ist in Parallelschaltung zum Kondensator 7 angeordnet und kann über den Schaltbaustein 18 mit dem Kondensator 7 verbunden werden.

Der Shunt-Regler 16 weist eine Reihenschaltung aus einem Widerstand 20 und einem Stelltransistor 21 und eine Reihenschaltung aus einer Zenerdiode 22 und einem Widerstand 23 auf, die jeweils der Gleichspannungsseite des Gleichrichters 13 parallel geschaltet sind. Außerdem weist der Shunt-Regler 16 eine Reihenschaltung aus einem Stelltransistor 24 und einer Diode 25 auf, über die der Kondensator 7 mit der Gleichspannungsseite des Gleichrichters 13 verbunden ist. Die Basis des Stelltransistors 21 ist an die Verbindungsleitung zwischen der Zenerdiode 22 und dem Widerstand 23 angeschlossen. Die Basis des Stelltransistors 24 ist an die Verbindungsleitung zwischen dem Widerstand 20 und dem Stelltransistor 21 angeschlossen. Die Zenerdiode 22 ist in Sperrrichtung, die Diode 25 in Durchgangsrichtung angeordnet.

Der Shunt-Regler 16 regelt die Betriebsspannung VCC auf einen konstanten Wert. Wird dieser Wert überschritten, so wird zunächst die Zenerdiode 22 leitend und von einem Strom i_{ZD} durchflossen. Daraus resultiert ein Basisstrom i_{b1} des Stelltransistors 21, so dass der Stelltransistor 21 niederohmiger wird und einen Basisstrom i_{b2} des Stelltransistors 24 ermöglicht. Infolge des Basisstroms i_{b2} wird der Stelltransistor 24 leitend, so dass ein Strom i₂ durch die Diode 25 zum Kondensator 7 fließt und diesen auflädt. Da es durch den Strom i_{ZD} zu einer Rückkopplung kommt, stellt sich der Strom i₂ so ein, dass die Betriebsspannung VCC konstant gehalten wird. Wegen der Stromverstärkung des Stelltransistors 24 reicht bereits ein sehr kleiner Strom i₁ durch den Stelltransistor 21 aus, um den Stelltransistor 24 leitend zu machen. Somit wird von einem insgesamt von der Gleichspannungsseite des Gleichrichters 13 in den Shunt-Regler 16 eingespeisten Strom iₛ zunächst der weit überwiegende Anteil als Strom i₂ dem Kondensator 7 zugeführt. Mit zunehmender Ladung des Kondensators 7 sinkt der durch eine gegebene Spannung erzeugbare Ladestrom, so dass der Strom i₂ schließlich keine Werte mehr annehmen kann, die für die Regelung der Betriebsspannung VCC ausreichend groß sind. Dies hat einen Anstieg der Betriebsspannung VCC zur Folge, der wiederum zu einem Anstieg des Stroms i_{ZD} führt. Dementsprechend steigt der Basisstrom i_{b1} des Stelltransistors 21, so dass der Stelltransistor 21 immer niederohmiger wird und dadurch einen immer höheren Strom ii ermöglicht. Der dadurch erzeugte Anstieg des Stroms iₛ führt zu einer Reduzierung der Betriebsspannung VCC.

Insgesamt wird die Betriebsspannung VCC mit dem Shunt-Regler 16 durch Regelung des Stroms iₛ, der sich aus den Strömen i₁ und i₂ zusammensetzt, auf einen konstanten Wert geregelt. Ausgehend von einem weitgehend entladenen Kondensator 7 stellt zunächst der Strom i₂, mit dem der Kondensator 7 geladen wird, den Hauptanteil des Stroms iₛ dar. Mit zunehmender Ladung des Kondensators 7 wird ein Punkt erreicht, ab dem der Anteil des Stroms i₂ am Strom iₛ abnimmt und der Anteil des Stroms i₁ zunimmt. Bei vollständig geladenem Kondensator 7 entspricht der Strom iₛ dann dem Strom i₁. Dadurch ist sichergestellt, dass die Betriebsspannung VCC auch während des Ladens des Kondensators 7 konstant bleibt und somit die Funktionsweise des Smartcard-Chips 6 durch den Ladevorgang nicht beeinträchtigt wird. Somit ist zu jedem Zeitpunkt eine uneingeschränkte Kommunikation mit dem Smartcard-Chip 6 möglich.

Fig. 4 zeigt ein Schaltbild eines weiteren Ausführungsbeispiels des Shunt-Reglers 16. Der grundsätzliche Aufbau des Shunt-Reglers 16 entspricht dem in Fig. 3 dargestellten Ausführungsbeispiel. Beim Ausführungsbeispiel der Fig. 4 wird die Betriebsspannung VCC über eine in Durchgangsrichtung geschaltete Diode 26 abgegriffen. Zwischen diesem Abgriff und der Masseleitung ist ein Glättungskondensator 27 geschalten, der die Betriebsspannung VCC glättet. Außerdem ist die auch beim Ausführungsbeispiel der Fig. 3 vorgesehene Zenerdiode 22 in Sperrrichtung zwischen den Abgriff der Betriebsspannung VCC und der Basis des Stelltransistors 21 geschalten. Durch die in Fig. 4 dargestellte Abwandlung des Shunt-Reglers 16 wird eine gegenüber dem Ausführungsbeispiel der Fig. 3 bessere Glättung der Betriebsspannung erreicht.

Bei den Ausführungsbeispielen der Fig. 3 und 4 können anstelle der Stelltransistoren 21 und 24 auch andersartige Bauelemente eingesetzt werden, deren Widerstand sich durch eine entsprechende Ansteuerung regeln lässt.

Neben den bereits genannten Anwendungen kann die erfindungsgemäße Vorrichtung beispielsweise auch als implantierbare Einheit, insbesondere in einer sterilen Umhüllung, für medizinische Zwecke eingesetzt werden. Dabei kann der Aktuator 2 unter anderem als Miniaturpumpe, Dosiergerät oder Membran z. B. zur Dosierung von Arzneimitteln ausgebildet werden. Im Bedarfsfall kann der Aktuator 2 von außen in Betrieb gesetzt werde. Ein Missbrauch durch Unbefugte kann durch eine Authentisierung verhindert werden.

## Patentansprüche

1. Vorrichtung zum Ansteuern eines Aktuators (2), mit einem Energiespeicher (7) zur Speisung des Aktuators (2), einem integrierten Schaltkreis (6) zur Steuerung der Energiezufuhr vom Energiespeicher (7) zum Aktuator (2) und einer Antenneneinrichtung (5), wobei an die Antenneneinrichtung (5) ein gegenüber dem integrierten Schaltkreis (6) als eine separate Einheit ausgebildeter Interfacebaustein (4) zur kontaktlosen Übertragung von Energie für den Energiespeicher (7) und von Daten für eine Kommunikation mit dem integrierten Schaltkreis (6) angeschlossen ist, **dadurch gekennzeichnet, dass** der Interfacebaustein (4) eine Modulationseinrichtung (12), nämlich einen Lastmodulator, aufweist.

2. Vorrichtung nach Anspruch 1, **dadurch gekennzeichnet, dass** die Modulationseinrichtung (12) direkt vom integrierten Schaltkreis (6) ansteuerbar ist.

3. Vorrichtung nach Anspruch 2, **dadurch gekennzeichnet, dass** eine Schalteinrichtung (18) zur Verbindung des Energiespeichers (7) mit dem Aktuator (2) vorgesehen ist.

4. Vorrichtung nach Anspruch 3, **dadurch gekennzeichnet, dass** mit der Schalteinrichtung (18) eine Verbindung zwischen dem Energiespeicher (7) und dem Aktuator (2) herstellbar ist, ohne die Energiezufuhr von der Antenneneinrichtung (5) zum Energiespeicher (7) zu unterbrechen.

## Claims

1. An apparatus for actuating an actuator (2), with an energy storage (7) for supplying the actuator (2), an integrated circuit (6) for controlling the energy supply from the energy storage (7) to the actuator (2) and an antenna device (5), wherein to the antenna device (5) an interface component (4) is connected, said interface component being is configured as a separate unit relative to the integrated circuit (6), for the contactless transmission of energy for the energy storage (7) and of data for a communication with the integrated circuit (6), **characterized in that** the interface component (4) has a modulating device (12), namely a load modulator.

2. The apparatus according to claim 1, **characterized in that** the modulating device (12) can be actuated directly by the integrated circuit (6).

3. The apparatus according to claim 2, **characterized in that** a switching device (18) is provided for connecting the energy storage (7) to the actuator (2).

4. The apparatus according to claim 3, **characterized in that** a connection can be established by means of the switching device (18) between the energy storage (7) and the actuator (2) without interrupting the energy supply from the antenna device (5) to the energy storage (7).

## Revendications

1. Dispositif de pilotage d'un actionneur (2), doté d'un accumulateur d'énergie (7) pour l'alimentation de l'actionneur (2), d'un circuit intégré (6) pour la commande de l'apport d'énergie de l'accumulateur d'énergie (7) à l'actionneur (2), et d'un équipement d'antenne (5), cependant que, à l'équipement d'antenne (5), un élément d'interface (4) réalisé sous forme d'un élément distinct du circuit intégré (6) est raccordé pour la transmission sans contact d'énergie pour l'accumulateur d'énergie (7) et de données pour une communication avec le circuit intégré (6), **caractérisé en ce que** l'élément d'interface (4) comporte un équipement de modulation (12), à savoir un modulateur de charge.

2. Dispositif selon la revendication 1, **caractérisé en ce que** l'équipement de modulation (12) est directement pilotable depuis le circuit intégré (6).

3. Dispositif selon la revendication 2, **caractérisé en ce qu'**un équipement de commutation (18) pour la connexion de l'accumulateur d'énergie (7) avec l'actionneur (2) est prévu.

4. Dispositif selon la revendication 3, **caractérisé en ce que**, avec l'équipement de commutation (18), une connexion entre l'accumulateur d'énergie (7) et l'actionneur (2) peut être établie sans interrompre l'apport d'énergie de l'équipement d'antenne (5) à l'accumulateur d'énergie (7).
